(19) Europäisches Patentamt
European Patent Office
Office européen des brevets

(11) **EP 1 450 070 A2**

(12) **EUROPÄISCHE PATENTANMELDUNG**

(43) Veröffentlichungstag:
**25.08.2004 Patentblatt 2004/35**

(51) Int Cl.$^7$: **F16H 23/04**

(21) Anmeldenummer: **04001639.6**

(22) Anmeldetag: **27.01.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **20.02.2003 DE 10307215**

(71) Anmelder: **ROBERT BOSCH GMBH**
**70442 Stuttgart (DE)**

(72) Erfinder: **Moench, Jochen**
**76547 Sinzheim (DE)**

(54) **Taumelscheibengetriebe**

(57) Ein axiales Taumelscheibengetriebe umfasst

- einen Rotationsantrieb (1),
- eine mit dem Rotationsantrieb ( 1 ) gekoppelte Taumelscheibe (11), die drehfest bezüglich der Taumelachse (T) gelagert ist,
- und eine auf einer Abtriebswelle (8) gelagerte Abtriebsscheibe (7) mit einer Stirnverzahnung (10), die mit einer komplementären Stirnverzahnung (9) abweichender Zahnanzahl ($z_T$, $z_A$) an der Taumelscheibe (4) in Eingriff steht,

einen Zustellkörper (11, 16, 24) zur Kopplung zwischen Rotationsantrieb (1) und Taumelscheibe (4), der

= vom Rotationsantrieb (1) in eine Umlaufbewegung um die Taumelachse T der Taumelscheibe (4) versetzbar ist,
und
= die Taumelscheibe (4) zur axialen Zustellung an die Abtriebsscheibe (7) von ihrer der Verzahnung (9) abgewandten Rückseite (12) her bei der Umlaufbewegung beaufschlagt.

Fig. 1

Fig. 2

**Beschreibung**

Die Erfindung betrifft ein Taumelscheibengetriebe mit den im Oberbegriff des Anspruches 1 angegebenen Merkmalen.

Ein derartiges Taumelscheibengetriebe ist aus der DE 199 34 161 A1 bekannt. Das dort offenbarte Getriebe weist einen Rotationsantrieb in Form einer Zahnscheibe auf, mit der eine Taumelscheibe gekoppelt ist. Die Kopplung erfolgt dabei über eine mit ihrer Achse in einem spitzen Winkel zur Rotationsachse der Zahnscheibe stehende Hohlwelle, auf der relativ dazu drehbar die Taumelscheibe gelagert ist. Letztere ist drehfest bezüglich der Achse des Rotationsantriebes durch eine entsprechende Abstützung im Gehäuse des Getriebes gelagert, wodurch die Drehbewegung des Rotationsantriebes in eine entsprechende Taumelbewegung der Taumelscheibe um ein koaxial mit der Rotationsachse liegende Taumelachse umgesetzt wird.

Auf einer Abtriebswelle ist eine Abtriebsscheibe mit einer Stirnverzahnung gelagert, die mit einer komplementären Stirnverzahnung an der Taumelscheibe in Eingriff steht. Zur Erzielung einer entsprechenden Untersetzung weisen die Stirnverzahnungen von Abtriebs- und Taumelscheibe unterschiedliche Zahnanzahlen auf.

Zum Hintergrund der Erfindung ist festzuhalten, dass beispielsweise im Kraftfahrzeugbau regelmäßig Getriebe benötigt werden, die für den Antrieb einer Komponente hohe Drehmomente aus einem niedrigeren Motormoment durch Untersetzung erzeugen. Beispiele hierfür sind Stellantriebe, Scheibenwischer-Direktantriebe ohne Hebelkinematik und dergleichen. Dabei werden unterschiedlichste Anforderungen an ein solches Getriebe gestellt, wie hoher Wirkungsgrad, kompakte Abmessungen, geringe Geräuschemissionen und häufig eine Selbsthemmung.

Die vorstehenden Anforderungen sind zwar mit Schnecken- und Planetengetrieben erfüllbar, wobei sich je nach Konstruktion und Aufbau stark unterschiedliche Eigenschaftsprofile ergeben. Schneckengetriebe haben jedoch den Nachteil, dass sie bei selbsthemmender Auslegung einen geringen Wirkungsgrad von in der Regel unter 50 % aufweisen. Außerdem benötigen sie wegen der prinzipiell vorzunehmenden Momentumlenkung und der sich nicht schneidenden oder parallel liegenden Antriebs- und Abtriebsachsen relativ viel Bauraum.

Übliche Planetengetriebe treiben axial ab und sind sehr kompakt. Allerdings verursachen sie durch die beteiligten, schnell drehenden Zahnräder einen relativ hohen Geräuschpegel.

Das eingangs erörterte axiale Taumelscheibengetriebe wird nun bekanntermaßen im Kraftfahrzeugbau, beispielsweise für elektrische Handbremsen, eingesetzt, da dieser Getriebetyp die vorstehend genannten Anforderungen erfüllt. Allerdings weist das bekannte Getriebe noch verschiedene Nachteile auf, wie beispielsweise die relativ aufwändige Lagerung der Taumelscheibe auf der "schiefen" Hohlwelle. Ferner muss das axiale Zustellmoment von der Hohlwelle über die Taumelscheibe selbst auf den radial außen liegenden Bereich der Stirnverzahnung mit der Abtriebsscheibe übertragen werden. Dies bedeutet, dass die Taumelscheibe selbst gewisse Stabilitätsanforderungen erfüllen muss. Die Taumelscheibe ist damit entsprechend massiv auszulegen, was den üblichen Anforderungen an Kompaktheit und Gewichtsersparnis im Fahrzeugbau widerspricht.

Der Erfindung liegt die Aufgabe zugrunde, ein axiales Taumelscheibengetriebe der gattungsgemäßen Art so zu verbessern, dass sich bei kompakterer und leichterer Auslegbarkeit der Taumelscheibe eine vereinfachte Lagerung derselben ergibt.

Die Lösung dieser Aufgabe ist im Kennzeichnungsteil des Anspruches 1 angegeben. Demnach ist ein Zustellkörper zur Kopplung zwischen Rotationsantrieb und Taumelscheibe vorgesehen, der vom Rotationsantrieb in eine Umlaufbewegung um die Taumelachse der Taumelscheibe versetzbar und letztere zur axialen Zustellung an die Abtriebsscheibe von ihrer der Verzahnung abgewandten Rückseite her bei dieser Umlaufbewegung beaufschlagt.

Durch die vorstehende Konstruktionsweise wird die Taumelbewegung und axiale Zustellung der Taumelscheibe nicht mehr durch die Taumelbewegung der schief stehenden Hohlwelle erzeugt, sondern die Taumelscheibe wird quasi direkt von hinten durch den umlaufenden Zustellkörper in Richtung zur Abtriebsscheibe zugestellt. Dies bedeutet, dass ein einfaches, die Taumelbewegung zulassendes Lager genügt. Ferner muss die Taumelscheibe nicht mehr das Zustellmoment vom Zentrum her nach außen übertragen, sodass sie weniger stabil und damit leichtgewichtiger und kompakter ausgelegt werden kann.

Gemäß einer bevorzugten Ausführungsform kann der Rotationsantrieb durch einen koaxial mit der Taumelachse gelagerten Antriebsring gebildet sein, zwischen dem und der Taumelscheibe ein Wälzkörper als Zustellkörper eingesetzt ist. Damit ist bereits eine Drehzahluntersetzung von 1:2 in der Eingangsstufe des Getriebes zu erzielen, da sich mit einer Umdrehung des Antriebsringes der Wälzkörper lediglich über den halben Umfang der Taumelscheibe bewegt.

Als Wälzkörper können ein Ritzel-Wälzkörper, eine unverzahnte Wälzrolle oder auch eine Wälzkugel vorgesehen sein.

Als Alternative zu einem koaxial mit der Taumelachse gelagerten Antriebsring kann auch ein radial zur Taumelachse gerichteter, umlaufend angetriebener Rotorzapfen als Rotationsantrieb vorgesehen sein, auf dem ein Wälzkörper als Zustellkörper gelagert ist. Vorzugsweise ist dabei radial dem Wälzkörper gegenüberliegend ein Unwucht-Ausgleichsgewicht vorgesehen. Bei der vorstehenden Anordnung entfällt die eingangsseitige Untersetzungsstufe von 1:2.

In einer weiteren bevorzugten Ausführungsform kann der Zustellkörper auch als einfacher Gleitstein ausgebildet sein, der an einem koaxial mit der Taumelachse gelagerten Antriebsring sitzt. Damit wird ein sehr einfacher Aufbau des Getriebes erreicht, der insbesondere in solchen Antrieben eingesetzt wird, bei denen Wirkungsgrad und Lebensdauer eine untergeordnete Rolle spielen.

Bevorzugter Weise wird die Taumelscheibe über ein Kugelgelenk an einer drehfesten oder rotierenden Haltewelle gelagert und durch eine gehäusefeste Abstützung an ihrem Umfang dreharretiert. Da die Haltewelle keine Momente übertragen muss, kann das vorstehende Lagersystem mit Kugelgelenk und Dreharretierung am Umfang der Taumelscheibe sehr einfach und kompakt ausgeführt sein.

Als Alternative zur gehäusefesten Abstützung kann die Taumelscheibe auch über ein drehfestes, winkelnachgiebiges Kardangelenk taumelnd gelagert sein, das durch eine übliche Kreuzgelenkanordnung, einen Federbalg oder dergleichen realisierbar ist. Die das Gelenk tragende Welle muss dann so ausgelegt sein, dass das Blockiermoment zur Dreharretierung der Taumelscheibe aufgenommen werden kann. Da ferner über die Taumelscheibe selbst die zur Dreharretierung notwendigen Momente übertragen werden, kann diese gegenüber Ausführungsformen mit einer gehäusefesten Abstützung am Umfang der Taumelscheibe nicht mehr so filigran ausgelegt werden.

Das erfindungsgemäße Taumelscheibengetriebe kann ferner in unterschiedliche Antriebssystem eingesetzt werden. Bevorzugt ist dabei die Integration in die Hohlwelle eines Innenläufer-Motors zu nennen, was im Ausführungsbeispiel noch näher beschrieben ist.

Weitere Merkmale, Einzelheiten und Vorteile der Erfindung ergeben sich aus der nachfolgenden Beschreibung, in der verschiedene Ausführungsbeispiele anhand der beigefügten Zeichnungen näher erörtert werden. Es zeigen:

Fig. 1      einen schematischen Axialschnitt eines Taumelscheibengetriebes in einer ersten Ausführungsform,

Fig. 2      eine Draufsicht auf die Taumelscheibe des Getriebes aus Pfeilrichtung II gemäß Fig. 1 mit eingezeichneter Kulissenführung,

Fig. 3 bis 6      schematische Axialschnitte durch Taumelscheibengetriebe in weiteren unterschiedlichen Ausführungsformen,

Fig. 7 und 8      schematische Axialschnitte des Taumelscheibengetriebes gemäß Fig. 1 mit angekoppelten Antriebsmotoren, und

Fig. 9      einen schematischen Axialschnitt eines in einen Innenläufer-Motor integrierten Taumelscheibengetriebes.

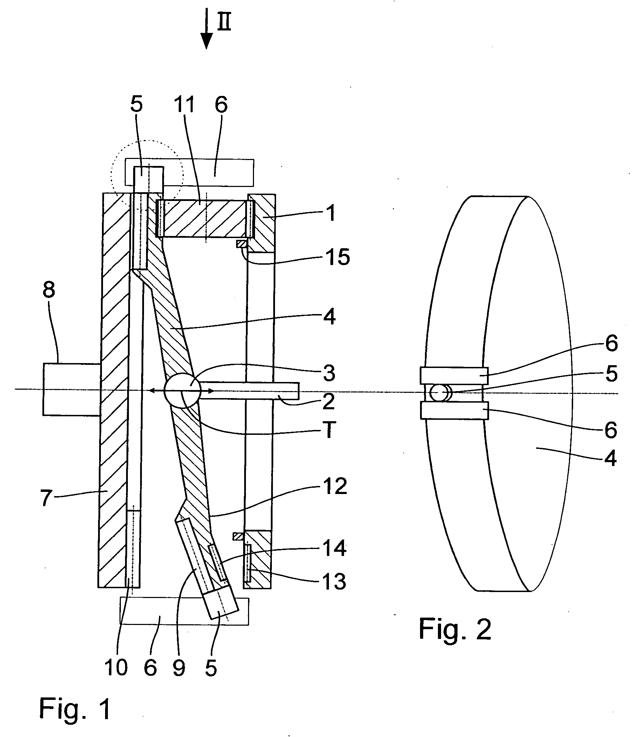

Anhand von Fig. 1 und 2 ist die grundsätzliche Ausgestaltung eines axialen Taumelscheibengetriebes zu erläutern. So ist ein Rotationsantrieb in Form eines Antriebsringes 1 vorgesehen, der auf einer Haltewelle 2 koaxial zur Taumelachse T des Taumelscheibengetriebes drehbar gelagert ist. Der Antriebsring 1 wird in hier nicht näher dargestellter Weise in Drehbewegung versetzt.

An der Haltewelle 2 ist ein Kugelgelenk 3 gehalten auf dem eine Taumelscheibe 4 sitzt. An zwei diametral gegenüberliegenden Positionen am Umfang der Taumelscheibe 4 sind jeweils Abstützzapfen 5 vorgesehen, die in komplementären, parallel zur Taumelachse T verlaufenden Kulissenführungen 6 im nicht näher dargestellten Getriebegehäuse geführt sind. Damit ist die Taumelscheibe 4 analog zu einem Sonnenrad bei einem sogenannten Wolfrom-Getriebe verdrehsicher im Gehäuse gelagert. Da dabei die Abstützung auf einem großen Durchmesser am Umfang der Taumelscheibe 4 erfolgt, sind die auftretenden Kräfte relativ gering.

Auf der dem Antriebsring 1 abgewandten Seite der Taumelscheibe 4 ist eine Abtriebsscheibe 7 angeordnet, die auf der Abtriebswelle 8 des Getriebes drehbar gelagert ist. Taumelscheibe 4 und Abtriebsscheibe 7 sind an ihren einander zugewandten Seiten vor dem Umfangsrand mit Stirnverzahnungen 9 bzw. 10 versehen, die an derjenigen Umfangsposition ineinander eingreifen, an der sich auf der Rückseite 12 der Taumelscheibe 4 ein Ritzel-Wälzkörper 11 als Zustellkörper zwischen Antriebsring 1 und Taumelscheibe 4 befindet. Dieser läuft bei der Rotation des Antriebsringes 1 in der dort und an der Rückseite 12 der Taumelscheibe 4 angelegten Stimverzahnung 13, 14 um, wodurch die Taumelbewegung mit umlaufenden Eingriff der Stirnverzahnung 9 der Taumelscheibe 4 in die Stirnverzahnung 10 der Abtriebsscheibe 7 um die Taumelachse T des Getriebes hervorgerufen wird. Das Untersetzungsverhältnis i ergibt sich dabei aus der Differenz der Zähnezahl der Stimverzahnungen 9, 10 an Taumelscheibe 4 und Abtriebsscheibe 7 gemäß der Beziehung

$$i = 1/[(Z_T - Z_A)) : Z_A]$$

mit $Z_T$: Zähnezahl der Stirnverzahnung an der Taumelscheibe 4 und
$Z_A$ Zähnezahl der Stirnverzahnung 10 an der Abtriebsscheibe 7.
Mit $Z_T = 49$ und $Z_A = 50$ ergibt sich ein Untersetzungsverhältnis von i = 1:50.

Mit der durch den Umlauf des Ritzel-Wälzkörpers 11 erzielten Eingangs-Untersetzung von 1:2 ergibt sich ein Gesamt-Untersetzungsverhältnis des Taumelscheibengetriebes von 1:100.

Die Haltewelle 2 mit Kugelgelenk 3 kann aufgrund des außen auf die Taumelscheibe 4 wirkenden Zustellkörpers in Form des Ritzel-Wälzkörpers 11 bei der Ausführungsform gemäß Fig. 1 sehr einfach ausgeführt sein, da keine Momente übertragen werden müssen. Ferner können Toleranzen des Kugelgelenks 3 relativ groß gewählt werden, wenn die Stirnverzahnung 9, 10 an Antriebs- oder Taumelscheibe 4, 7 als Kronradverzahnung ausgeführt sind, da dann geringe Verschiebungen der Zahnräder gegenüber der Rotationsachse des Verzahnungspartners keine Auswirkungen haben. Die axiale Lage wird dabei durch das Zusammenspiel der einander abgewandten Stirnverzahnungen 9, 14 an der Taumelscheibe 4 bestimmt. Aus Fertigungsgründen ist es im Übrigen einfacher, die Taumelscheibe 4 mit einer einfachen Stirnverzahnung und die Abtriebsscheibe 7 mit einer Kronradverzahnung zu versehen. In die gleiche Richtung zielt die Auslegung des Ritzel-Wälzkörpers 11 als einfaches Ritzel und der damit eingreifenden Stirnverzahnungen 13, 14 als Kronräder. Auf diese Weise kann sich der Ritzel-Wälzkörper 11 in axialer Richtung auf sich selbst bezogen frei bewegen, ohne dass dies Einfluss auf das Getriebeverhalten hat. Bei allen Verzahnungen sind im Übrigen kleine Flankenwinkel anzustreben, da dadurch geringe Axialkräfte entstehen, die die wesentlichen Lagerbelastungen des Getriebes hervorrufen. Zudem basiert die Hemmwirkung des Getriebes darauf, dass über die Abtriebswelle 8 in das Getriebe eingebrachte Momente nur geringe Kräfte auf den Zustellkörper ausüben können. Die zur Hauptachse (Taumelachse T) des Getriebes tangentialen Kräfte in der Verzahnung zwischen Abtriebsscheibe 7 und Taumelscheibe 4 werden von den Abstützzapfen 5 über die Kulissenführung 6 ins Gehäuse abgeführt. Nur die axialen Kräfte werden weitergegeben, die jedoch zur Überwindung der Getriebehemmung in der Regel nicht ausreichen.

Der Ritzel-Wälzkörpers 11 ist beim Umlauf in den beiden Stirnverzahnungen 13, 14 zwischen Antriebsring 1 und Taumelscheibe 4 im Übrigen durch einen sich entlang der Stirnverzahnung 13 radial innen erstreckenden Sicherungsring 15 zusätzlich geführt.

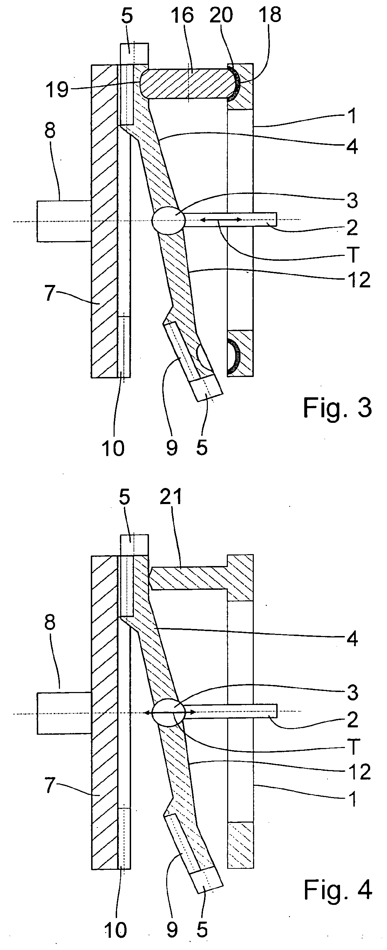

Bei der in Fig. 3 dargestellten Ausführungsform ist der Zustellkörper als unverzahnte Wälzrolle 16 ausgebildet, die mit ihrer balligen Lauffläche 17 in entsprechend geformten Laufbahnen 18, 19 in Antriebsring 1 und Taumelscheibe 4 läuft. Speziell die Laufbahn 18 im Antriebsring ist mit einer reibungserhöhenden Auflage 20 versehen, um ein Durchrutschen und damit ein Versagen des Getriebes zu unterbinden. Im Übrigen entspricht die Ausführungsform gemäß Fig. 3 derjenigen nach Fig. 1, womit auf die dortige Beschreibung verwiesen werden kann.

Bei der Ausführungsform des Taumelscheibengetriebes gemäß Fig. 4 ist statt eines Wälzkörpers als Zustellkörper ein mit dem Antriebsring 1 fest verbundener, beispielsweise einstückig angesetzter Gleitstein 21 vorgesehen, der wiederum die Taumelscheibe 4 von ihrer Rückseite 12 her beaufschlagt und damit bei Drehung des Antriebsringes 1 in ihre Getriebe-Taumelbewegung versetzt. Bei der Werkstoffauswahl von Gleitstein 21 und Taumelscheibe 4, insbesondere in deren Auflagebereich für den Gleitstein 21, sind die tribologische Beanspruchung und ein möglichst geringer Reibwert zu berücksichtigen.

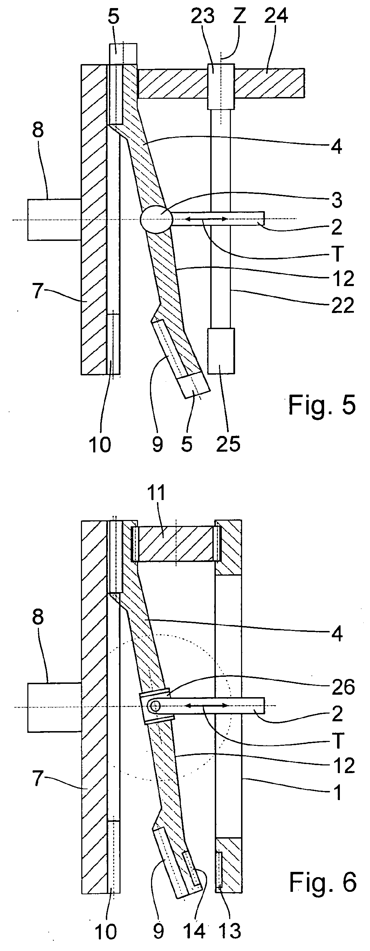

Bei der in Fig. 5 gezeigten Ausführungsform ist der Rotationsantrieb nicht durch einen Antriebsring - wie bei den vorher beschrieben Varianten - gebildet, sondern durch eine Art Rotor 22. der auf der angetriebenen Haltewelle 2 drehbar gelagert ist. Der Rotor 22 trägt an seinem einen Ende einen Rotorzapfen 23, auf dem wiederum ein Wälzkörper um die Zapfenachse Z frei drehbar gelagert ist. Diese Wälzrolle 24 beaufschlagt wiederum die Taumelscheibe 24 von deren Rückseite 12 her, wobei durch die Drehung des Rotors 22 und das damit verbundene Abrollen der Wälzrolle 24 auf der Taumelscheibe 4 mit umlaufendem Eingriff in die Abtriebsscheibe der Getriebelauf und die entsprechende Untersetzung hervorgerufen werden. Im Übrigen ist an dem dem Rotorzapfen 23 und der Wälzrolle 24 gegenüberliegenden Ende des Rotors 22 ein Ausgleichsgewicht 25 zur Vermeidung einer Unwucht vorgesehen.

Die in Fig. 6 gezeigte Ausführungsform entspricht hinsichtlich der Auslegung von Antriebsring 1 und Zustellkörper als Ritzel-Wälzkörper 11 der Ausführungsform gemäß Fig. 1. Einziger Unterschied ist die Lagerung der Taumelscheibe 4, die nicht über ein Kugelgelenk sondern ein Kardangelenk 26 gelagert ist. Die Haltewelle 2 muss dann allerdings drehfest sein, um die geforderte drehbare Arretierung der Taumelscheibe 4 zu erzielen. Insoweit müssen die Haltewelle 2 und das Kardangelenk 26 so ausgelegt sein, dass auftretende Blockiermomente abgefangen werden können. Da ferner die Dreharretierung nicht nach außen durch Abstützzapfen, sondern über die Festlegung des Kardangelenks 26 selbst erfolgt, muss die Taumelscheibe 4 diesbezügliche Momente übertragen, weshalb sie beispielsweise nicht mehr mit großflächigen und vielzähligen Durchbrüchen versehen werden kann. Diese bewirken, dass die Luftbewegungen im Getriebe durch die Taumelbewegung und die damit hervorgerufenen Laufgeräusche verringert werden. Dieser Nachteil kann dadurch kompensiert werden, dass durch die fehlenden Abstützzapfen 5 mit entsprechender Kulissenführung 6 der Bauraum des Getriebes abnimmt.

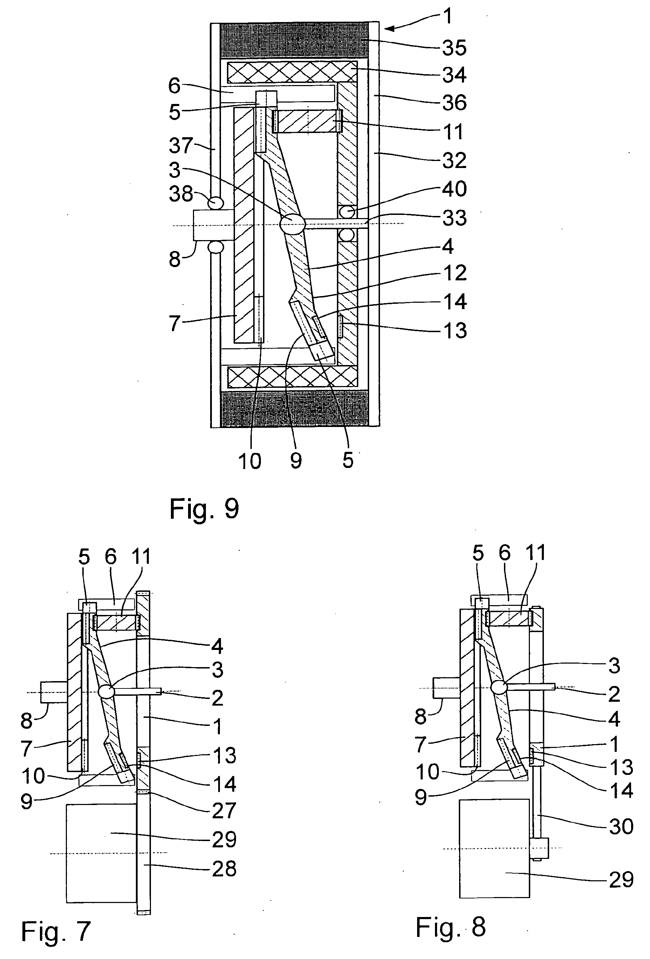

Die Fig. 7 bis 9 zeigen Kopplungs- und Einsatzmöglichkeiten eines Taumelscheibengetriebes, wie es in Fig. 1 isoliert dargestellt ist. Das Getriebe als solches braucht demzufolge also nicht nochmals erläutert werden. Bei der Ausführungsform gemäß Fig. 7 wird der Antriebsring 1 über eine radial außenliegende Verzahnung 27 von einem Antriebsritzel 28 eines seitlich angeflanschten Elektromotors 29 in Rotation versetzt. Das Übersetzungsverhältnis dieses Zahnradgetriebes geht dabei in das Gesamt-Übersetzungsverhältnis ein.

Dies trifft auch für die Ausführungsform gemäß Fig. 8 zu. Hier wird der Antriebsring 1 über einen Riementrieb 30 an den Elektromotor 29 angekoppelt. Als Riementrieb 30 kann ggf. ein Zahnriemen verwendet werden.

Während die beiden Anordnungen gemäß Fig. 7 und 8 zwar axiale Baulänge sparen, jedoch in der Breite relativ viel Raum beanspruchen, zeigt Fig. 9 die kompakte Integration des Taumelscheibengetriebes in die Hohlwelle eines Innenläufer-Motors 31. Die Funktion des Antriebsringes 1 wird dabei direkt vom Rotor 32 des Motors übernommen, der über ein Rotorlager 40 auf der zentralen Haltewelle 2 gelagert ist. Am Umfang des Rotors 32 sitzen die Magnete 34 mit dem Rückschlussring, die mit den äußeren, stationären Spulen 35 des Motors 31 kooperieren.

Der Gehäuserückseite 36 gegenüberliegend ist in der Gehäusevorderseite 37 über ein Abtriebslager 38 die Abtriebswelle 8 des Taumelscheibengetriebes gelagert. Die Rotationsbewegung wird durch die Drehung des Rotors 32 und das entsprechende Abwälzen des Ritzel-Wälzkörpers 11 auf der Taumelscheibe 4 hervorgerufen.

Von Vorteil bei der erörterten Integration ist insbesondere, dass der Rotor 32 eine Doppelfunktion wahrnimmt, indem es als Innenrotor die Magnete 34 des Motors lagert und gleichzeitig den Wälzkörper 11 antreibt.

**Patentansprüche**

1. Axiales Taumelscheibengetriebe umfassend

   - einen Rotationsantrieb (1),
   - eine mit dem Rotationsantrieb (1) gekoppelte Taumelscheibe (4), die drehfest bezüglich der Taumelachse (T) ist, und
   - eine auf einer Abtriebswelle (8) gelagerte Abtriebsscheibe (7) mit einer Stirnverzahnung (10), die mit einer komplementären Stirnverzahnung (9) abweichender Zahnanzahl ($z_T$, $z_A$) an der Taumelscheibe (4) in Eingriff steht,

   **gekennzeichnet durch**

   - einen Zustellkörper (11, 16, 24) zur Kopplung zwischen Rotationsantrieb (1) und Taumelscheibe (4), der

     = vom Rotationsantrieb (1) in eine Umlaufbewegung um die Taumelachse (T) der Taumelscheibe (4) versetzbar ist, und
     = die Taumelscheibe (4) zur axialen Zustellung an die Abtriebsscheibe (7) von ihrer der Verzahnung (9) abgewandten Rückseite (12) her bei der Umlaufbewegung beaufschlagt.

2. Taumelscheibengetriebe nach Anspruch 1, **dadurch gekennzeichnet, dass** der Rotationsantrieb durch einen koaxial mit der Taumelachse (T) gelagerten Antriebsring (1) gebildet ist, zwischen dem und der Taumelscheibe (4) ein Wälzkörper (11, 16) als Zustellkörper eingesetzt ist.

3. Taumelscheibengetriebe nach Anspruch 2, **dadurch gekennzeichnet, dass** der Antriebsring (1) und die Taumelscheibe (4) an ihrer Rückseite (12) jeweils Stirnverzahnungen (13, 14) aufweisen, die mit einem Ritzel-Wälzkörper (11) als Zustellkörper in Eingriff stehen.

4. Taumelscheibengetriebe nach Anspruch 2, **dadurch gekennzeichnet, dass** der Wälzkörper als unverzahnte Wälzrolle (16) oder Wälzkugel ausgebildet ist und auf jeweiligen Laufbahnen (18, 19) an Antriebsring (1) und Rückseite (12) der Taumelscheibe (4) unter Reibschluss abläuft.

5. Taumelscheibengetriebe nach Anspruch 1, **dadurch gekennzeichnet, dass** der Zustellkörper als Wälzkörper (24) ausgebildet ist, der auf einem radial zur Taumelachse (T) gerichteten, umlaufend angetriebenen Rotorzapfen (23) als Rotationsantrieb gelagert ist.

6. Taumelscheibengetriebe nach Anspruch 5, **dadurch gekennzeichnet, dass** ein Unwucht-Ausgleichsgewicht (25) radial dem Wälzkörper (24) gegenüberliegend vorgesehen ist.

7. Taumelscheibengetriebe nach Anspruch 1, **dadurch gekennzeichnet, dass** der Rotationsantrieb durch einen koaxial mit der Taumelachse (T) gelagerten Antriebsring (1) gebildet ist, an dem ein die Taumelscheibe (4) beaufschlagender Gleitstein (21) als Zustellkörper angeordnet ist.

8. Taumelscheibengetriebe nach einem der vorgenannten Ansprüche, **dadurch gekennzeichnet, dass** die Taumelscheibe (4) über ein Kugelgelenk (3) an einer drehfesten oder rotierenden Haltewelle (2) gelagert und durch eine gehäusefeste Abstützung (5, 6) an ihrem Umfang dreharretiert ist.

9. Taumelscheibengetriebe nach einem der Ansprüche 1 bis 7, **dadurch gekennzeichnet, dass** die Taumelscheibe (4) über ein Kardangelenk (26) taumelnd gelagert ist.

10. Taumelscheibengetriebe nach einem der vorgenannten Ansprüche, **dadurch gekennzeichnet, dass** es in den Rotor (32) eines Innenläufer-Motors (31) integriert ist.

Fig. 1

Fig. 2

Fig. 3

Fig. 4

Fig. 5

Fig. 6

Fig. 9

Fig. 7

Fig. 8